# FASCICULE DE BREVET EUROPEEN

(11) **EP 0 430 796 B1**
(45) Date de publication et mention de la délivrance du brevet: **28.12.1994**
(21) Numéro de dépôt: 90403360.2
(22) Date de dépôt: 27.11.1990
(51) Int. Cl.: F16F 13/00

(54) **Articulation élastique à raideur variable**
Elastisches Gelenk von variabler Steife
Elastic articulation with variable stiffness

(30) Priorité: 30.11.1989 FR 8915815
(43) Date de publication de la demande: 05.06.1991
(73) Titulaire: HUTCHINSON, F-75384 Paris Cédex 08 (FR); REGIE NATIONALE DES USINES RENAULT, 92109 Boulogne-Billancourt (FR)
(72) Inventeur: Girard, André, F-28200 La Chapelle du Noyer (FR); Dubos, Daniel, F-92600 Asnieres (FR)
(74) Mandataire: Picard, Jean-Claude Georges

(56) Documents cités:
- DE-A- 3 730 582
- FR-A- 2 394 715
- GB-A- 2 165 027
- PATENT ABSTRACTS OF JAPAN vol. 10, no. 146 (M-482)(2203) 28 mai 1986,& JP-A-61 2934 (HONDA) 08 janvier 1986,

## Description

La présente invention concerne une articulation élastique à raideur variable.

On entend désigner ainsi une articulation pouvant avoir diverses applications, notamment dans le domaine de l'automobile, et dont il convient de pouvoir modifier à volonté la raideur dans au moins une direction, sous l'influence d'un agent de commande extérieur, éventuellement de façon automatique, dans une chaîne d'asservissement. L'agent de commande sera avantageusement constitué d'un fluide sous pression, et l'articulation comprendra d'une façon générale un bloc de matériau élastique monté entre des surfaces d'appui rigides d'une structure qui le contient, au moins deux de ces surfaces pouvant se déplacer l'une par rapport à l'autre dans au moins une direction, sous l'action d'efforts extérieurs agissant dans cette direction.

Le document JP-A-612934 (préambule de la revendication 1) décrit une articulation dans laquelle, pour faire en sorte qu'une modification de la pression dudit fluide détermine une modification correspondante de la raideur du bloc de matériau élastique dans la direction axiale, on prévoit que ledit bloc de matériau élastique délimite dans ladite structure au moins une chambre propre à être alimentée en fluide sous pression par une conduite débouchant à l'extérieur, et que ledit bloc comporte au moins une partie déformable sous l'effet de ladite pression, la déformation de ladite partie modifiant la raideur du bloc dans ladite direction.

Le but de l'invention est d'obtenir une articulation du même type général, mais dont la raideur soit variable en direction radiale.

A cet effet, la présente invention concerne une articulation dans laquelle ladite structure ainsi que ledit bloc de matériau élastique possèdent un axe de symétrie de révolution, caractérisée en ce que ladite direction est une direction radiale, à savoir perpendiculaire audit axe, et en ce que ledit bloc de matériau élastique comporte deux entailles en V opposées, s'ouvrant sur les deux extrémités frontales dudit bloc et s'étendant d'une façon générale transversalement par rapport à ladite direction radiale, de sorte que la raideur dudit bloc augmente ou diminue dans cette direction lorsque la pression dudit fluide, respectivement augmente ou diminue, provoquant ainsi la mise en appui croissante ou respectivement décroissante des deux parois opposées de ladite entaille l'une sur l'autre.

Ladite structure ainsi que ledit bloc de matériau élastique pourront posséder un plan de symétrie perpendiculaire audit axe.

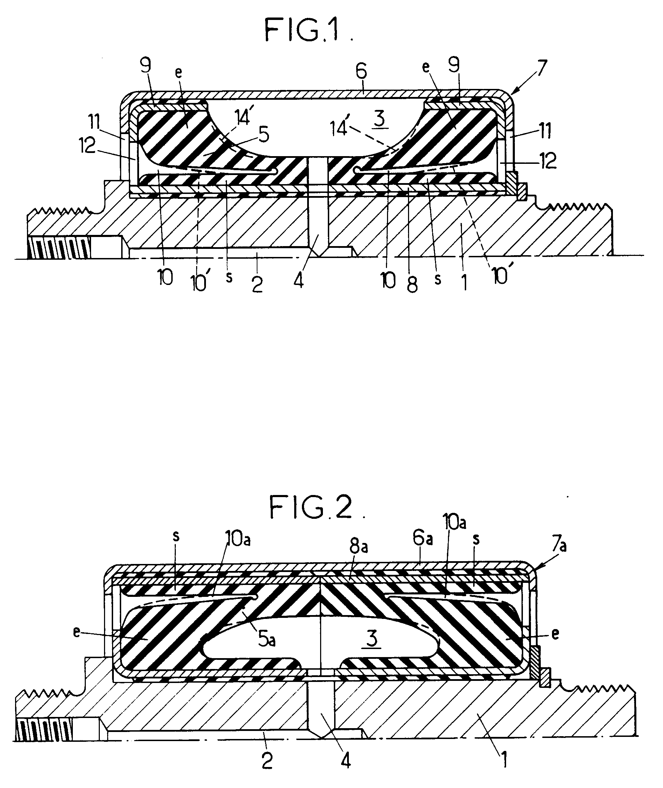

Deux modes d'exécution de l'invention vont maintenant être décrits à titre d'exemples nullement limitatifs, avec référence aux figures 1 et 2 du dessin ci-annexé, qui sont des demi-coupes axiales des articulations.

Dans ces figures, on a référencé 1 un noyau axial, pouvant servir d'axe de montage, et traversé axialement par une conduite 2 d'amenée de fluide sous pression dans une chambre intérieure annulaire 3. La chambre 3 est reliée à la conduite 2 par un ou plusieurs canaux radiaux 4.

Dans le cas de la figure 1, on voit que la chambre 3 est constituée entre une gorge centrale périphérique d'un bloc de matériau élastique 5, et la partie cylindrique de la paroi rigide extérieure 6 de la structure 7, entourant l'axe ou noyau 1, et qui maintient ce bloc 5 sur cet axe. Le bloc 5 est adhérisé dans une monture intérieure comprenant un tube central 8 fixé axialement sur le noyau 1, et deux demi-bagues extérieures 9 en butée dans les angles de la paroi rigide 6.

Le bloc 5 comporte deux entailles en V opposées 10, s'ouvrant sur ses deux extrémités frontales et séparées du tube 8 par des parties minces ou semelles,s.

La paroi extérieure 6 étant pourvue d'une large ouverture centrale 11, à chaque extrémité, de même que les demi-bagues 9 (ouvertures 12), on voit que la paroi extérieure 6 de la structure 7 peut se déplacer radialement par rapport à l'axe 1, sous l'effet des efforts radiaux, d'orientation angulaire quelconque, s'exerçant sur cette paroi.

En supposant que les conditions de fonctionnement exigent une augmentation de la raideur radiale de cette articulation, ces conditions, détectées de façon appropriée, détermineront une augmentation de la pression du fluide injecté par les conduites 2 et 4 dans la chambre 3.

On voit alors que, le volume de la chambre 3 augmentant, les entailles 10 vont tendre à se refermer, les deux parties épaisses e du bloc 5 se comportant comme des poutres à raideur variable en flexion vers l'axe, ces poutres prenant, sur les semelles s de ce bloc 5, un appui croissant, d'autant plus important que la pression du fluide injecté dans la chambre 3 est importante (les lignes en tirets 10' et 14' montrent la déformation du bloc 5).

On comprend alors que la raideur radiale du bloc 5, c'est-à-dire de l'ensemble de l'articulation, va bien augmenter sur toute sa périphérie, en fonction de l'augmentation de la pression de commande du fluide injecté dans la chambre 3.

Le mode de réalisation de la figure 2 fonctionne exactement sur les mêmes principes, sauf que la base du bloc de matériau élastique 5 est adhérisée, par ses semelles s, sur un tube 8a qui est extérieur au bloc de matériau élastique 5a, au lieu d'être intérieur, comme le tube 8.

Par suite, lorsque la pression dans la chambre 3 formée intérieurement dans le bloc 5a augmentera, les parties épaisses e du bloc 5a vont encore fléchir, mais cette fois-ci à l'opposé de l'axe (voir lignes en tirets), augmentant encore leur appui sur les semelles s, et par suite augmentant la raideur radiale globale de l'articulation.

Il va de soi que dans les deux cas (fig. 1 et fig. 2), si la pression du fluide dans la chambre 3 diminue, l'élasticité du bloc 5 ou 5a assure une réouverture des entailles 10 ou 10a, ce qui diminue la rigidité radiale de l'articulation en proportion.

## Revendications

1. Articulation élastique à raideur variable, à savoir dont la raideur peut être modifiée à dessein sous l'influence d'un agent extérieur, du type comprenant un bloc de matériau élastique (5, 5a) monté entre des surfaces d'appui rigides d'une structure (7, 7a) qui le contient, au moins deux de ces surfaces pouvant se déplacer l'une par rapport à l'autre dans au moins une direction, sous l'action d'efforts extérieurs agissant dans cette direction, ledit bloc de matériau élastique (5, 5a) délimitant dans ladite structure au moins une chambre (3) propre à être alimentée en fluide sous pression par une conduite (2) débouchant à l'extérieur, et ledit bloc (3) comportant au moins une partie (e) déformable sous l'effet de ladite pression, la déformation de ladite partie modifiant la raideur du bloc dans ladite direction, articulation dans laquelle ladite structure ainsi que ledit bloc de matériau élastique possèdent un axe de symétrie de révolution, caractérisée en ce que ladite direction est une direction radiale, à savoir perpendiculaire audit axe, et en ce que ledit bloc (5, 5a) de matériau élastique comporte deux entailles (10, 10a) en V opposées, s'ouvrant sur les deux extrémités frontales dudit bloc et s'étendant d'une façon générale transversalement par rapport à ladite direction radiale, de sorte que la raideur dudit bloc (5, 5a) augmente ou diminue dans cette direction lorsque la pression dudit fluide, respectivement augmente ou diminue, provoquant ainsi la mise en appui croissante ou respectivement décroissante des deux parois opposées de ladite entaille (10, 10a), l'une sur l'autre.

2. Articulation selon la revendication 1, caractérisée en ce que ladite structure ainsi que ledit bloc de matériau élastique possèdent un plan de symétrie perpendiculaire audit axe.

## Claims

1. Elastic articulation with variable stiffness, namely one whose stiffness may be modified at will under the influence of an external agent, of the type comprising a block of elastic material (5, 5a) mounted between rigid bearing surfaces of a structure (7, 7a) which contains it, at least two of these surfaces being able to move with respect to each other in at least one direction, under the action of external forces acting in this direction, the said block of elastic material (5, 5a) defining in the said structure at least one chamber (3) able to be supplied with pressurised fluid via a duct (2) opening to the outside, and the said block (3) having at least one part (e) which can be deformed by the effect of the said pressure, the deformation of the said part modifying the stiffness of the block in the said direction, an articulation in which the said structure as well as the said block of elastic material have an axis of symmetry of revolution, characterised in that the said direction is a radial direction, namely one that is perpendicular to the said axis, and in that the said block (5, 5a) of elastic material has two V-shaped recesses (10, 10a) opposite each other, opening onto the two front ends of the said block and extending in a generally transverse direction with respect to the said radial direction, so that the stiffness of the said block (5, 5a) increases or decreases in this direction when the pressure of the said fluid increases or decreases respectively, thus causing the two opposite walls of the said recess (10, 10a) to bear on each other increasingly or decreasingly respectively.

2. Articulation according to Claim 1, characterised in that the said structure and the said block of elastic material have a plane of symmetry perpendicular to the said axis.

## Patentansprüche

1. Elastisches Gelenk mit variabler Steifigkeit, und zwar absichtlich unter der Einwirkung eines äußeren Mittels veränderbarer Steifigkeit, bestehend aus einem Block (5, 5a) aus elastischem Material, der zwischen starren Stützflächen einer Struktur (7, 7a) befestigt ist, die diesen enthält, wobei wenigstens zwei dieser Oberflächen sich zueinander in wenigstens einer Richtung unter der Einwirkung von äußeren Kräften, die in dieser Richtung wirken, verschieben können, wobei der Block (5, 5a) aus elastischem Material in der Struktur wenigstens eine Kammer (3) begrenzt, die über eine außen mündende Leitung (2) mit einem Druckmittel beaufschlagbar ist, und der Block (5, 5a) wenigstens einen Abschnitt (e) enthält, der unter der Wirkung des Druckes deformierbar ist, wobei die Deformation dieses Abschnittes die Steifigkeit des Blockes in der erwähnten Richtung verändert, und die Struktur des Gelenkes, ebenso wie der Block aus elastischem Material, eine zylindrische Symmetrieachse haben, dadurch gekennzeichnet, daß die erwähnte Richtung eine radiale Richtung, nämlich senkrecht zu der erwähnten Achse, ist und daß der Block (5, 5a) aus elastischem Material zwei Einkerbungen (10, 10a) enthält, die V-förmig sind und sich gegenüberliegen, sich zu den beiden vorderen Enden des Blockes öffnen und sich allgemein in Querrichtung in bezug auf die erwähnte radiale Richtung erstrecken, derart, daß die Steifigkeit des Blockes (5, 5a) sich in dieser Richtung vergrößert oder vermindert, wenn der Druck des Druckmittels sich vergrößert bzw. verkleinert, und auf diese Weise die zunehmende bzw. abnehmende Abstützung der beiden sich gegenüberliegenden Wände der Einkerbung (10, 10a) aufeinander hervorruft.

2. Gelenk nach Anspruch 1, dadurch gekennzeichnet, daß die Struktur, ebenso wie der Block aus elastischem Material, eine zu der Achse senkrecht verlaufende Symmetrieebene aufweist.
